# EUROPÄISCHE PATENTSCHRIFT

(11) **EP 2 431 718 B1**
(45) Veröffentlichungstag und Bekanntmachung des Hinweises auf die Patenterteilung: **30.05.2018**
(21) Anmeldenummer: 11177085.5
(22) Anmeldetag: 10.08.2011
(51) Int. Cl.: G01K 1/16, B60R 16/023

(54) **Vorrichtung zur Masseverbindung eines Steuergeräts und zur Temperaturmessung**
Device for earthing a control device and temperature measurement
Dispositif de mise à la terre d'un appareil de commande et de mesure de température

(30) Priorität: 20.09.2010 AT 15622010
(43) Veröffentlichungstag der Anmeldung: 21.03.2012
(73) Patentinhaber: MELECS EWS GmbH & Co KG, 7011 Siegendorf (AT)
(72) Erfinder: Hellinger, Leopold, 3710 Ziersdorf (AT); Neumann, Gerhard, 3231 St. Margarethen (AT); Vogt, Gerald, 2325 Himberg (AT)
(74) Vertreter: Maier, Daniel Oliver

(56) Entgegenhaltungen:
- EP-A2- 1 495 901
- WO-A1-91/12428

## Beschreibung

### Technisches Gebiet

Die vorliegende Erfindung betrifft eine Vorrichtung zur Temperaturmessung, insbesondere für Getriebe und/oder Kupplungen im Kfz-Bereich, sowie zum Herstellen einer Masseverbindung für ein Steuergerät, insbesondere mit einem Getriebe und/oder einer Kupplung. Dabei umfasst die erfindungsgemäße Vorrichtung einen Temperatursensor zum Messen der Getriebe- bzw. Kupplungstemperatur.

### Stand der Technik

Im Automobilbereich werden heute in Kraftfahrzeugen hoch entwickelte elektronische Steuergeräte zur Kontrolle vielfältiger Funktionen wie z.B. zur Steuerung eines Getriebes und/oder einer Kupplung eingesetzt. Zur Steuerung eines Schaltgetriebes und/oder einer Kupplung werden von einem Steuergerät Signale von mehreren Sensoren erfasst und verarbeitet, wobei das Steuergerät üblicherweise mit dem Gehäuse des Getriebes und/oder der Kupplung verbunden ist.

Das Steuergerät besteht üblicherweise aus auf einer Trägerplatte angebrachten elektronischen Modulen - sogenannten elektronischen Bauelementen.

Um das Steuergerät gegen Umwelteinflüsse, Schmutz oder mechanische Beanspruchung zu schützen, wird dieses üblicherweise in ein spezielles Gehäuse eingesetzt. Diese Gehäuse besteht meist aus zwei Teilen - einem unteren Gehäuseteil, welches oft aus Kunststoff gefertigt ist, und einem Gehäusedeckel, welcher beispielsweise aus Aluminium hergestellt ist. Diese beiden Gehäuseteile können beispielsweise durch Schrauben, Nieten oder mittels Verkleben miteinander verbunden sein. Zwischen den beiden Gehäuseteilen ist üblicherweise eine Dichtung angebracht, welche meist aus Flüssig-Silikon hergestellt wird.

Zum Schutz des Steuergeräts bzw. der elektronischen Bauelemente vor z.B. Überspannungen, elektrostatischer Aufladung ist häufig eine so genannte Masseverbindung vorgesehen. Durch die Masseverbindung wird eine leitfähige Verbindung vom Steuergerät bzw. vom Gehäuse des Steuergeräts, insbesondere dem Gehäusedeckel, mit einer leitfähigen Umgebung bzw. mit einem Bezugspotential hergestellt. In der Automobilindustrie stellt üblicherweise die Karosserie oder der Rahmen das Bezugspotential dar. Daher weisen Steuergeräte, welche auf Kupplungen und/oder Getrieben angebracht sind, eine Masseverbindung mit einem Gehäuse der Kupplung bzw. des Getriebes auf.

Üblicherweise wird eine derartige Masseverbindung durch Kabel, Kupfergeflechtbänder oder mehrfach gebogene Blechlaschen realisiert, welche beidseitig verschraubt sind. Das heißt, das Kabel, Kupfergeflechtband oder die Blechlasche wird in einem eigenen Arbeitsschritt z.B. durch Verschrauben sowohl am Getriebe und/oder der Kupplung sowie am Gehäusedeckel angebracht. Von Nachteil ist hierbei, dass eine derartige Masseverbindung nicht nur technisch aufwendig, sondern auch kostenintensiv ist.

Zusätzlich ist es im Kfz-Bereich notwendig Temperaturen zu überwachen, da extreme Temperaturen rasch zu Problemen bzw. Schäden am Kraftfahrzeug führen können. Heutzutage ist es deshalb üblich, dass in bestimmten Bereichen - wie z.B. bei Kupplung und/oder Getriebe - eine laufende Überwachung der Temperatur oder auch eine fortlaufende Temperaturmessung durch entsprechende Kfz-Elektronik übernommen wird. Eine derartige Messung wird üblicherweise mit Hilfe eines Temperatursensors durchgeführt.

Der Temperatursensor ist dabei meist an einer relevanten oder geeigneten Stelle angebracht und übermittelt die gemessenen Temperaturen beispielsweise an ein entsprechendes Steuergerät. Üblicherweise wird für die Temperaturmessung von Kupplung und/oder Getriebe ein Temperatursensor an das Getriebe und/oder die Kupplung moniert. Die elektrischen Signale des Temperatursensors werden dann z.B. über eine Steckverbindung an das entsprechende Steuergerät weitergeleitet. Der Nachteil eines derart montierten Temperatursensors liegt darin, dass sein Einbau relativ aufwendig und teuer ist, und dass es aufgrund der Steckverbindungen immer wieder zu Störungen kommen kann.

Aus der Schrift DE 198 23 685 A1 ist ein Steuergerät für ein automatisches Kraftfahrzeug-Getriebe mit einem Gehäuse bekannt, bei welchem eine Bodenplatte des Gehäuses flächig und thermisch leitend mit einem zu überwachenden Aggregat verbunden ist. Auf der Bodenplatte ist mittels eines thermisch leitenden Klebers eine Temperaturmesseinheit bestehend aus einem Schaltträger und Widerstandsbahnen mit temperaturabhängiger Leitfähigkeit angebracht. Der Nachteil bei der in der Schrift DE 198 23 685 A1 offenbarten Temperaturmessung liegt - neben einem aufwendigen und wenig platzsparenden Einbau - insbesondere in der flächigen Anbringung der Bodenplatte des Gehäuses auf dem zu überwachenden Aggregat. Dadurch wird nicht nur die Temperaturmesseinheit, sondern auch das Steuergerät erwärmt, wodurch es zu Störungen und Schäden z.B. bei Bauelementen des Steuergeräts kommen kann.

Aus der Schrift DE 297 01 502 U1 ist ein Schalt- und Steuergerät für ein Kraftfahrzeug bekannt, bei welchem eine Leiterplatte durch eine elektrische Potentialanbindung bzw. Masseanbindung mit einem Gehäuse zur Abschirmung von Störstrahlung dient. Die Leiterplatte ist dazu mit der Gehäusewanne verbunden, wobei diese Verbindung auch zum Ableiten von in Bauelementen produzierter Wärme verwendet wird, und über eine Auflagefläche erfolgt, welche die Masseverbindung zu einem Motorgetriebegehäuse herstellt und über welche die produzierte Wärme abgeleitet wird. Damit kann die Leiterplatte zwar zur Masseverbindung eingesetzt werden. Allerdings wird von der Leiterplatte Wärme weggeleitet - z.B. zu einem Motorgetriebegehäuse, wodurch eine Temperaturmessung eines zu überwachenden Aggregats (z.B. Getriebe, Kupplung, etc.) nicht möglich ist. Es würde bei Einsatz der Leiterplatte z.B. durch Anbringen eines Temperatursensors für eine Temperaturmessung/ -überwachung eines Aggregats bzw. der Umgebung zu Messfehlern kommen, da die abzuleitende Wärme der Bauelemente auf der Leiterplatte mitgemessen werden würde.

Die EP 1 495 901 A2 zeigt ein Steuergerät für ein Getriebe eines Kraftfahrzeuges, wobei das Steuergerät direkt am Gehäuse des Getriebes angebracht ist. Aus der WO 91/12428 A1 ist eine Steuereinrichtung für ein Kraftfahrzeug bekannt, bei dem mittels eines Temperatursensors, der im Gehäuse des Steuergeräts angeordnet ist, die Temperatur der Brennkraftmaschine des Kraftfahrzeugs ermittelt wird.

### Darstellung der Erfindung

Der Erfindung liegt daher die Aufgabe zugrunde, eine Vorrichtung zur Masseverbindung und zur Temperaturmessung anzugeben, durch welche auf einfache, platzsparende und kostengünstige Weise eine Temperaturmessung, insbesondere von Getriebe und/oder Kupplung, mit geringer Störanfälligkeit durchführbar ist, und durch welche eine einfache Masseverbindung für ein Steuergerät herstellbar ist.

Die Lösung dieser Aufgabe erfolgt durch eine Vorrichtung nach Anspruch 1. Der Hauptaspekt der erfindungsgemäß vorgeschlagenen Lösung besteht darin, dass auf einfache und kostengünstige Weise dafür gesorgt wird, dass einerseits mittels eines auf der Trägerplatte des Steuergeräts angebrachten Temperatursensors die Temperatur einer zu messenden Einheit wie z.B. des Getriebes und/oder der Kupplung überwacht wird, und dass andererseits durch die erfindungsgemäße Vorrichtung auch für eine einfache Masseverbindung des Steuergeräts mit der zu messenden Einheit gesorgt wird. Dadurch kann auf eine kostspielige und arbeitsintensive Montage von Kabeln, Kupfergeflechtbändern, etc. als Masseverbindung sowie auf externe Temperatursensoren mit z.B. relativ störanfälligen Steckverbindungen zum Steuergerät verzichtet werden. Der Stanzteil kann auf einfache Weise bei der Herstellung eines unteren Gehäuseteils, welche z.B. mittels Spritzgussverfahren aus Kunststoff erzeugt wird, an diesem angebracht werden. Durch die einfache Trennung von Wärmepfad und Strompfad kann außerdem für eine optimale Anbindung zur Temperaturmessung bzw. für die Masseverbindung gesorgt werden, da die Zungen entsprechend der jeweiligen Nutzung ausgeführt oder z.B. mit Kunststoff - beispielsweise bei der Gehäuseherstellung - isoliert werden können.

Dabei hat sich als günstig erwiesen, wenn die zu messende Einheit durch die Wärme und Strom leitende Verbindung zur Temperaturübertragung mit auf der Trägerplatte des Steuergeräts aufgebrachte Leitung des Temperatursensors verbunden ist, und dass durch die Wärme und Strom leitende Verbindung eine elektrische Verbindung zwischen der zu messenden Einheit und einem Gehäusedeckel des Steuergeräts hergestellt ist. Auf diese vorteilhafte Weise wird über die Wärme leitende Verbindung eine Verbindung zur Temperaturmessung mit dem Temperatursensor hergestellt. Gleichzeitig wird über die Strom leitende Verbindung für eine Masseverbindung gesorgt, welche das Steuergerät mit der zu messenden Einheit, insbesondere dem Getriebe und/oder der Kupplung, bzw. deren Gehäuse als Massepotential auf einfache Weise verbindet.

Es empfiehlt sich dabei, wenn die als Strompfad eingesetzte zweite Zunge Kontaktzähne für eine elektrische Verbindung zwischen der zumessenden Einheit und Gehäusedeckel des Steuergeräts aufweist. Dabei ist die Wärme und Strom leitende Verbindung idealer Weise bis auf die Kontaktzähne mit Kunststoff umspritzt. Der Kunststoff sorgt dabei für eine Isolierung des Strompfads und kann auf einfache Weise z.B. während der Gehäuseproduktion aufgebracht werden. Mit Hilfe der Kontaktzähne der zweiten Zunge bzw. des Strompfads kann auf einfache Weise eine Oxidschicht des üblicherweise aus Aluminium hergestellten Gehäusedeckels durchdrungen werden. Damit ist eine sichere elektrische Verbindung bzw. Masseverbindung zwischen dem Gehäusedeckel des Steuergeräts und der zu messenden Einheit bzw. dem Befestigungspunkt des Steuergeräts auf der zu messenden Einheit z.B. Getriebe und/oder Kupplung gewährleistet.

Bei einer bevorzugten Fortbildung der Erfindung ist ein Ende der als Wärmepfad eingesetzten ersten Zunge und die auf der Trägerplatte aufgebrachte Leitung des Temperatursensors mit elastischem Flüssig-Silikon umspritzt. Durch die Umspritzung des Endes der ersten Zunge bzw. des Wärmepfads und der Leitung des Temperatursensors mit Flüssig-Silikon wird vorteilhaft ein guter und verlustarmer Transport der Temperatur über den Wärmepfad von der zu messenden Einheit (z.B. Getriebe, Kupplung, etc.) zum Temperatursensor sichergestellt. Dabei wird idealer Weise die Temperatur der zu messenden Einheit am Befestigungspunkt des Steuergeräts über z.B. eine Montagehülse eingeleitet und über die erste Zunge des Stanzteils bzw. den Wärmepfad zum Temperatursensor auf der Trägerplatte des Steuergeräts transportiert. Die Umspritzung mit Flüssig-Silikon kann auf einfache Weise und ohne zusätzlichen Arbeitsschritt mittels Spritzgussverfahren gemeinsam mit einer Dichtung für das Gehäuse und eventuell vorhandenen Anpressdome angebracht werden.

### Kurzbeschreibung der Zeichnung

Die Erfindung wird nachfolgend in beispielhafter Weise anhand der beigefügten Figuren erläutert. Es zeigen:
- Figur 1: beispielhaft einen schematischen Aufbau der erfindungsgemäßen Vorrichtung zur Masseverbindung für ein Steuergerät und zur Temperaturmessung
- Figur 2: beispielhaft und schematisch einen Schnitt durch die erfindungsgemäße Vorrichtung und das Steuergerät im Bereich der Anbringung der zu messenden Einheit
- Figur 3: beispielhaft und schematisch einen Ausschnitt des Steuergeräts mit der erfindungsgemäße Vorrichtung im Bereich der Masseverbindung

### Ausführung der Erfindung

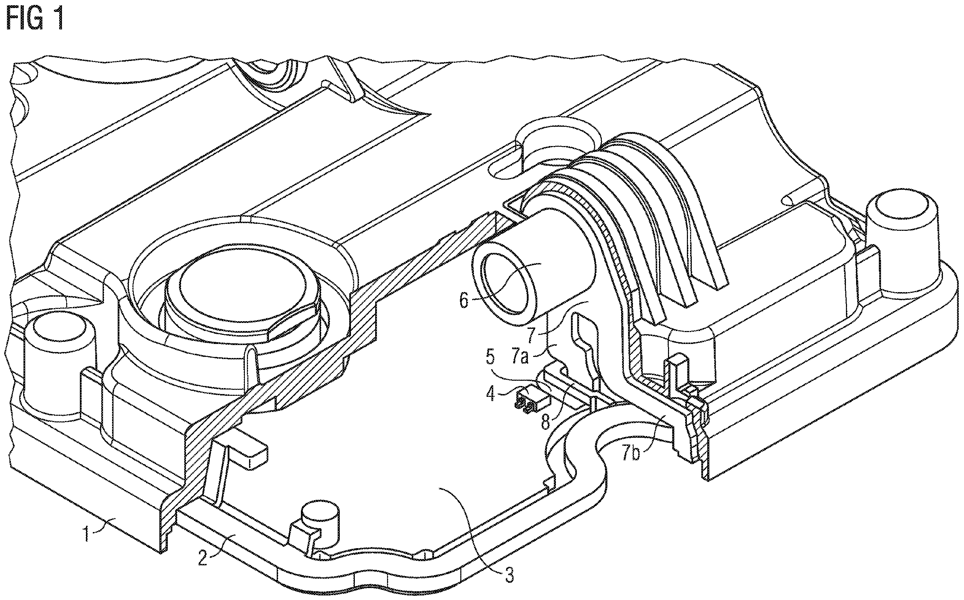

In der Figur 1 ist schematisch und beispielhaft ein Steuergerät für z.B. ein Getriebe und/oder eine Kupplung dargestellt, welches in einem Gehäuse untergebracht ist. Dabei zeigt Figur 1 eine Unterseite des Steuergeräts bzw. des Gehäuses, welches in einem Bereich für die Montage am Getriebe und/oder der Kupplung aufgebrochen dargestellt ist. In der in Figur 1 gewählten Darstellungsweise ist daher nur ein erster Gehäuseteil 1 bzw. ein unterer Gehäuseteil 1 sichtbar. Der erste Gehäuseteil 1 ist mittels Spritzgussverfahren aus einem Kunststoff (z.B. Thermoplast) hergestellt.

Im ersten bzw. unteren Gehäuseteil 1 befindet das Steuergerät bestehend aus einer Trägerplatte 3, auf der elektronische Bauelemente beispielsweise für Steuerung, Regelung, etc. des Getriebes bzw. der Kupplung angebracht sind. Mit einem zweiten Gehäuseteil 9 bzw. Gehäusedeckel 9, welcher aufgrund der Darstellungsweise in Figur 1 nicht sichtbar ist, ist das Gehäuse verschlossen, um die Trägerplatte 3 und die darauf befindlichen Bauelemente vor z.B. Verschmutzung und/oder Beschädigung zu schützen. Der Gehäusedeckel 9 ist beispielsweise aus Metall wie z.B. Aluminium. Zwischen den beiden Gehäuseteilen 1 und 9 ist eine Dichtung 2 angebracht, die üblicherweise mittels Spritzgussverfahren aus Flüssig-Silikon hergestellt ist. Die beiden Gehäuseteile 1 und 9 sind mittels Verbindungselemente wie z.B. Schrauben, Nieten, etc. miteinander verbunden. Auf der Trägerplatte 3 des Steuergeräts ist zusätzlich für die Temperaturmessung einer zu messenden Einheit wie beispielsweise Getriebe und/oder Kupplung ein Temperatursensor 4 angebracht. Auf der Trägerplatte 3 ist auch eine Leitung 5 des Temperatursensors 4 aufgebracht. Diese Leitung 5 des Temperatursensors 4 ist beispielsweise als Kupferfläche ausgestaltet, auf welcher der Temperatursensor 4 verlötet ist, und welche in ein einseitig geöffnetes Langloch 5 in der Trägerplatte 3 übergeht. Dabei sind die Seitenwände des Langloches 5 z.B. ebenfalls mit Kupfer ausgekleidet.

Für die Montage an einer zu messenden Einheit (z.B. Getriebe und/oder Kupplung) weist der untere Gehäuseteil 1 des Steuergeräts eine Montagehülse 6 aus Metall auf. Diese ist beispielsweise in den unteren Gehäuseteil 1 eingegossen oder eingepasst und ist aus Metall z.B. Aluminium hergestellt. Auf dieser Montagehülse 6 ist eine Strom und Wärme leitende Verbindung 7 angebracht. Die Strom und Wärme leitende Verbindung 7 ist z.B. als Stanzteil 7 aus Metall (z.B. Aluminium) ausgeführt. Der Stanzteil 7 ist auf die Montagehülse 6 aufgepresst und weist zwei Zungen 7a und 7b auf. Wie die Montagehülse 6 ist auch der Stanzteil 7 fast vollflächig umspritzt bzw. in den unteren Gehäuseteil 1 eingegossen, wobei die jeweiligen Enden der beiden Zungen 7a und 7b nicht von Kunststoff bedeckt sind bzw. aus dem Kunststoff des unteren Gehäuseteils 1 herausragen.

Die erste Zunge 7a dient als Wärmepfad und von ihr wird die von der zu messenden Einheit wie z.B. dem Getriebe und/oder der Kupplung über die Montagehülse 6 eingeleitete Temperatur bis nahe an die Trägerplatte 3 und damit bis zur Leitung 5 des Temperatursensors 4 gebracht. Für eine thermische Übertragung zwischen dem Ende der ersten Zunge 7a bzw. dem Wärmepfad 7a und der Leitung 5 des Temperatursensors 4, welche als ein mit Kupfer ausgekleidetes Langloch 5 ausgestaltet ist, ist das Ende der ersten Zunge 7a mit einer Umspritzung 8 aus z.B. Flüssig-Silikon als Toleranzausgleich versehen. Dadurch wird beispielsweise die Wärme bzw. die Temperatur der zu messenden Einheit über die Umspritzung 8 bzw. den Toleranzausgleich 8 vom Ende der ersten Zunge 7a in eine Seitewand des Langlochs 5 bzw. zur Leitung 5 des Temperatursensors 4 eingeleitet und kann dadurch vom Temperatursensor 4 gemessen werden. Dadurch wird ein möglichst verlustarmer Transport der Temperatur von der zu messenden Einheit zum auf der Trägerplatte 3 angebrachten Temperatursensor 3 garantiert.

Die Umspritzung 8 kann beispielsweise mittels eines so genannten 2K-Spritzgussverfahren oder 2-Shoot Molding-Verfahren gemeinsam mit der Dichtung 2 aufgebracht werden. Bei einem 2K-Spritzgussverfahren oder 2-Shoot Molding-Verfahren wird z.B. in einem ersten Schritt - einem sogenannten ersten Schuss - mittels Spritzguss der untere Gehäuseteil 1 aus einem Thermoplast (Kunststoff) hergestellt. Nach Erstarren des unteren Gehäuseteils 1 werden in einem zweiten Schritt bzw. zweiten Schuss die Dichtung 2 sowie die weitere Komponenten aus Flüssig-Silikon wie z.B. die Umspritzung 8 und/oder eventuell notwendige Anpressdome in Form eines separaten Spritzaggregats angespritzt.

Die Strom und Wärme leitende Verbindung 7 bzw. der auf der Montagehülse 6 aufgepresste Stanzteil 7 weist auch eine fast vollständig umspritzte zweite Zunge 7b auf. Die zweite Zunge 7b wird als Strompfad bzw. für eine Masseverbindung des Steuergeräts eingesetzt. Durch die zweite Zunge 7b, welche an einem Ende nicht umspritzte Kontaktzähne 7c (in Figur 1 nicht sichtbar) aufweist, wird eine sichere elektrische Verbindung zwischen z.B. einem Befestigungspunkt des Steuergeräts auf der zu messenden Einheit (z.B. Getriebe, Kupplung, etc.) und dem in Figur 1 nicht sichtbaren Gehäusedeckel 9 des Steuergeräts hergestellt.

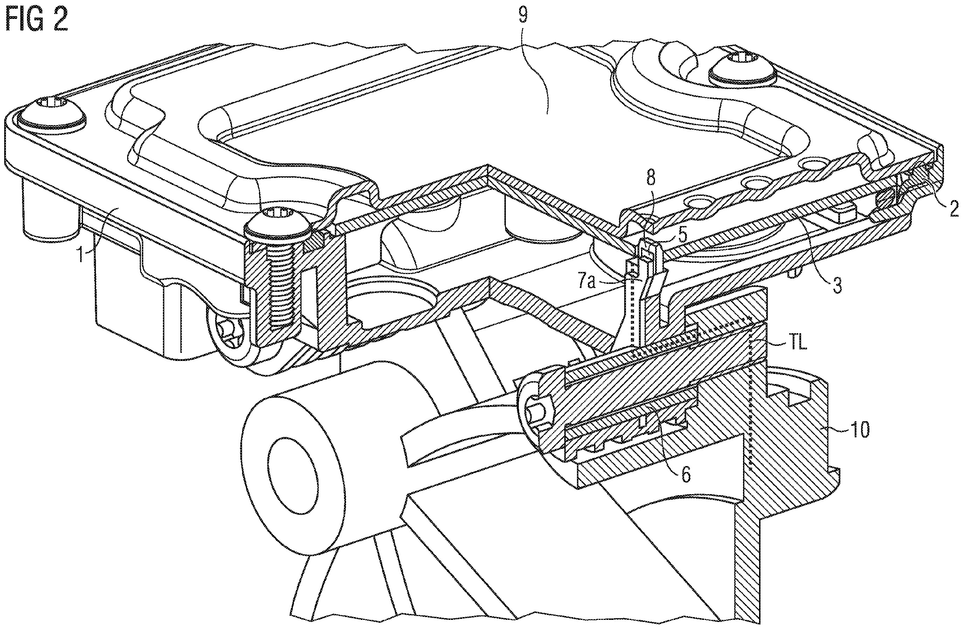

Figur 2 zeigt schematisch und beispielhaft das Steuergerät mit Gehäuse, welche an der zu messenden Einheit 10 über die Montagehülse 6 angebracht ist, wobei das Steuergerät im Bereich des Befestigungspunkts zur besseren Darstellung der Temperaturleitung TL und eines Aufbau des Steuergeräts aufgeschnitten ist. In Figur 2 ist das Steuergerät mit dem zweiteiligen Gehäuse bestehend aus dem unteren Gehäuseteil 1 und dem Gehäusedeckel 9 zu sehen. Zwischen den Gehäuseteilen 1 und 9 befindet sich die Dichtung 2 aus Flüssig-Silikon und die Gehäuseteile 1 und 9 sind mit Verbindungselemente wie z.B. Schrauben miteinander verbunden.

Im unteren Gehäuseteil 1 ist wieder die Trägerplatte 3 des Steuergeräts angebracht. Diese weist in einem Bereich das Langloch 5 bzw. die Leitung 5 für den Temperatursensor 4 auf. In das Langloch 5 bzw. zur Leitung 5 für den Temperatursensor 4 ragt das Ende der ersten Zunge 7a (Wärmepfad) des Stanzteils 7, welche auf der im Schnitt dargestellten Montagehülse 6 aufgebracht ist. Dieses Ende der ersten Zunge 7a weist wieder im Bereich des Langlochs 5 die Umspritzung 8 als Toleranzausgleich auf.

Mit der Montagehülse 6 ist das Steuergerät an der zu messenden Einheit 10 - beispielsweise dem Getriebe und/oder der Kupplung - angebracht und über ein Befestigungselement wie z.B. eine Schraube mit der zu messenden Einheit 10 verbunden. Die Temperatur der zu messenden Einheit 10 wird dann über einen Pfad der Temperaturleitung TL von der zu messenden Einheit 10 über die Befestigung des Steuergeräts - z.B. Befestigung und Montagehülse 6 - geleitet. Von der Montagehülse 6 wird dann die Temperatur in den aufgepressten Stanzteil 7 - insbesondere in die erste Zunge 7a bzw. in den Wärmepfad 7a - eingekoppelt. Die erste Zunge 7a leitet dann die Temperatur weiter zum Langloch 5 in der Trägerplatte 3 bzw. zur Leitung 5 des Temperatursensors 4, wo über den Toleranzausgleich 8 bzw. die Umspritzung 8 die Temperatur für eine Messung durch den Temperatursensor 4 in die z.B. Kupfer beschichteten Seitenwände des Langlochs 5 eingeleitet wird.

Dadurch wird ein möglichst verlustarmer Transport der Temperatur von der zu messenden Einheit 10 zum Temperatursensor 4 auf der Trägerplatte 3 erzielt. Zusätzlich ist auf diese Weise ein kostspieliges Anbringen eines externen Temperatursensors nicht mehr notwendig, welcher aufgrund von externer Verkabelung und Steckverbindungen zum Steuergerät relativ störanfällig ist und leicht beschädigt werden kann.

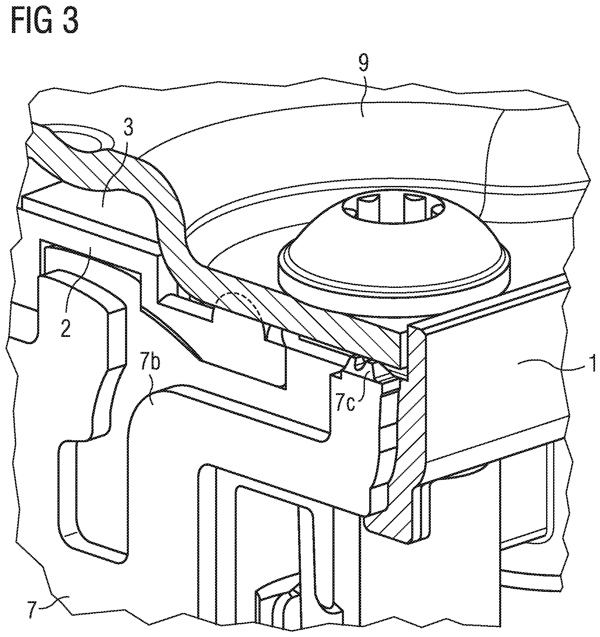

Figur 3 zeigt schematisch in beispielhafter Weise einen Ausschnitt des Steuergeräts, wobei das Steuergerät im Bereich der Strom und Wärme leitenden Verbindung 7 aufgeschnitten ist, welcher einem Bereich über dem Befestigungspunkt des Steuergeräts an der zu messenden Einheit, insbesondere dem Getriebe und/oder der Kupplung entspricht. In dem von Figur 3 gezeigten Ausschnitt wird die Anbindung der Masseverbindung vergrößert dargestellt.

In Figur 3 ist dabei wieder der untere Gehäuseteil 1, die Trägerplatte 3 sowie der Gehäusedeckel 9 des Steuergeräts dargestellt. Zwischen den beiden Gehäuseteilen ist wieder die Dichtung 2 angebracht. In dem ersten bzw. unteren Gehäuseteil 1 ist die Strom und Wärme leitende Verbindung 7, deren zweite Zunge 7b in Figur 3 gezeigt ist, eingegossen.

Dabei ist die zweite Zunge 7b fast vollflächig umspritzt. Nur die Kontaktzähne 7c am Ende der zweiten Zunge 7b bzw. des Strompfads 7b sind nicht vom Kunststoff des unteren Gehäuseteil 1 bedeckt. Mit den Kontaktzähnen 7c wird der Gehäusedeckel 9 des Steuergeräts kontaktiert. Üblicherweise dienen die Kontaktzähne 7c dazu, die Oxidschicht des meist aus Aluminium hergestellten Gehäusedeckels 9 zu durchdringen. Auf diese Weise wird eine sichere elektrische Verbindung zwischen dem Gehäusedeckel 9 und dem Befestigungspunkt des Steuergeräts und damit der zu messenden Einheit 10, (z.B. dem Getriebe und/oder der Kupplung), welche beispielsweise als Bezugspotential dient, hergestellt und für eine Masseverbindung des Steuergeräts gesorgt.

Mit der in den unteren Gehäuseteil 1 eingegossenen und auf der Montagehülse 6 aufgepressten Strom und Wärme leitenden Verbindung 7 kann damit nicht nur ein externer Temperatursensor durch einen im Steuergerät befindlichen Temperatursensor 4 ersetzt werden, sondern auch auf einfache Weise auf ein zusätzliches Anbringen von Kabeln, Kupfergeflechtbändern oder mehrfach gebogenen Blechen als Masseverbindung für das Steuergerät verzichtet werden. Dadurch entfällt nicht nur der Einbau eines teueren externen Temperatursensors mit seinen teilweise störanfälligen elektrischen Anbindungen, sondern auch ein Anbringen/Anschrauben der Masseverbindung (z.B. Kabel, Kupfergeflechtband, etc.) nach Montage des Steuergeräts, da die Strom und Wärme leitende Verbindung 7 für die Masseverbindung und die Temperaturmessung bereits gemeinsam mit der Montagehülse 6 bei der Herstellung des unteren Gehäuseteils 1 - z.B. durch Einlegen in das Spritzguss-Werkzeug - im Steuergerät bzw. in Gehäuse angebracht wird.

### Bezugszeichenliste

- 1: Erster Gehäuseteil
- 2: Dichtung
- 3: Trägerplatte
- 4: Temperatursensor
- 5: Leitung des Temperatursensors
- 6: Montagehülse
- 7: Strom und Wärme leitende Verbindung (Stanzteil) 7a erste Zunge (Wärmepfad) 7b zweite Zunge (Strompfad) 7c Kontaktzähne der zweiten Zunge
- 8: Umspritzung (Toleranzausgleich)
- 9: zweiter Gehäuseteil (Gehäusedeckel)
- 10: zu messende Einheit (Getriebe und/oder Kupplung)

## Patentansprüche

1. Vorrichtung umfassend ein Steuergerät, wobei es sich um eine Vorrichtung zur Masseverbindung des Steuergeräts und zur Temperaturmessung handelt, insbesondere für Getriebe und/oder Kupplung (10) eines Kraftfahrzeuges, wobei das Steuergerät eine Trägerplatte und ein Gehäuse aufweist, wobei ein Temperatursensor (4) vorgesehen ist, der auf der Trägerplatte (3) des Steuergeräts angebracht ist, und wobei zwischen dem Steuergerät und einer zu messenden Einheit (10), insbesondere dem Getriebe und/oder der Kupplung, eine Wärme und Strom leitende Verbindung (7) derart vorgesehen werden kann, dass eine Temperatur der zu messenden Einheit (10) vom Temperatursensor (4) messbar ist und eine Masseverbindung (7b) zwischen dem Steuergerät und der zu messenden Einheit (10) herstellbar ist, **dadurch gekennzeichnet, dass** das Gehäuse eine Montagehülse aufweist, und dass die Wärme und Strom leitende Verbindung (7) als Stanzteil ausgeführt ist, welcher auf der Montagehülse (6) des Gehäuses (1, 9) des Steuergeräts aufgepresst ist, und dass die Wärme und Strom leitende Verbindung (7) zwei Zungen (7a, 7b) aufweist, wobei eine erste Zunge (7a) als Wärmepfad (TL) und eine zweite Zunge (7b) als Strompfad dienen.

2. Vorrichtung nach Anspruch 1, **dadurch gekennzeichnet, dass** die zu messende Einheit (10) durch die Wärme und Strom leitende Verbindung (7, 7a) zur Temperaturübertragung mit auf der Trägerplatte (3) des Steuergeräts aufgebrachte Leitungen (5) des Temperatursensors (4) verbindbar ist, und dass durch die Wärme und Strom leitende Verbindung (7, 7b) eine elektrische Verbindung (7b) zwischen der zu messenden Einheit (10), dem Steuergerät und einem Gehäusedeckel (9) des Steuergeräts herstellbar ist.

3. Vorrichtung nach einem der Ansprüche 1 bis 2, **dadurch gekennzeichnet, dass** die als Strompfad eingesetzte zweite Zunge (7b) Kontaktzähne (7c) für eine elektrische Verbindung zwischen der zumessenden Einheit (10) und dem Gehäusedeckel (9) des Steuergeräts aufweist.

4. Vorrichtung nach einem der Ansprüche 1 bis 3, **dadurch gekennzeichnet, dass** die Wärme und Strom leitende Verbindung (7) bis auf die Kontaktzähne (7c) mit einem Kunststoff umspritzt ist.

5. Vorrichtung nach einem der Ansprüche 1 bis 4, **dadurch gekennzeichnet, dass** ein Ende der als Wärmepfad eingesetzten ersten Zunge (7b) und die auf der Trägerplatte (3) aufgebrachte Leitung (5) des Temperatursensors (4) mit elastischem Flüssig-Silikon umspritzt sind.

6. Vorrichtung nach einem der Ansprüche 1 bis 5, **dadurch gekennzeichnet, dass** die Umspritzung (8) mittels Spritzgussverfahren gemeinsam mit einer Dichtung (2) für das Gehäuse (1, 9) und eventuell vorhandenen Anpressdome hergestellt ist.

## Claims

1. Apparatus comprising a control device, wherein the apparatus is for earthing the control device and for measuring temperature, in particular for a gearbox and/or clutch (10) of a motor vehicle, wherein the control device has a supporting plate and a housing, wherein a temperature sensor (4) which is mounted on the supporting plate (3) of the control device is provided, and wherein a heat and current conducting connection (7) can be provided between the control device and a measured unit (10), in particular the gearbox and/or the clutch, such that a temperature of the measured unit (10) can be measured by the temperature sensor (4) and an earth connection (7b) can be established between the control device and the measured unit (10),
**characterized in that**
the housing has a mounting sleeve, and that the heat and current conducting connection (7) is embodied as a stamped part which is pressed onto the mounting sleeve (6) of the housing (1, 9) of the control device, and that the heat and current conducting connection (7) has two tabs (7a, 7b), wherein a first tab (7a) serves as a heat path (TL) and a second tab (7b) serves as a current path.

2. Apparatus according to claim 1, **characterised in that** the measured unit (10) can be connected by means of the heat and current conducting connection (7, 7a), for the purpose of the temperature transfer, to lines (5) of the temperature sensor (4) which are mounted on the supporting plate (3) of the control device, and that an electrical connection (7b) can be established by means of the heat and current conducting connection (7, 7b) between the measured unit (10), the control device and a housing lid (9) of the control device.

3. Apparatus according to one of claims 1 to 2, **characterised in that** the second tab (7b), which is used as a current path, has contact teeth (7c) for an electrical connection between the measured unit (10) and the housing lid (9) of the control device.

4. Apparatus according to one of claims 1 to 3, **characterised in that** the heat and current conducting connection (7) is encapsulated with a synthetic material as far as the contact teeth (7c).

5. Apparatus according to one of claims 1 to 4, **characterised in that** one end of the first tab (7b), said first tab (7b) being used as a heat path, and the line (5) of the temperature sensor (4), said line being mounted on the supporting plate (3), are encapsulated with elastic liquid silicone.

6. Apparatus according to one of claims 1 to 5, **characterised in that** the encapsulation (8) is produced together with a seal (2) for the housing (1, 9) and any contact-pressure domes that may be present by means of injection moulding processes.

## Revendications

1. Dispositif comprenant un appareil de commande, dans lequel ledit dispositif est un dispositif destiné à la mise à la terre de l'appareil de commande et à une mesure de température, en particulier pour une transmission et/ou un couplage (10) d'un véhicule automobile, dans lequel l'appareil de commande présente une plaque de support et une enveloppe, dans lequel un capteur de température (4) est prévu, ledit capteur étant fixé sur la plaque de support (3) de l'appareil de commande, et dans lequel une connexion conductrice de chaleur et d'électricité (7) entre l'appareil de commande et une unité à mesurer (10), en particulier ladite transmission et/ou ledit couplage, peut être prévue de sorte qu'une température de l'unité à mesurer (10) par le capteur de température (4) peut être mesurée et une connexion de mise à la terre (7b) peut être fournie entre l'appareil de commande et l'unité à mesurer (10), **caractérisé en ce que**
l'enveloppe présente une douille de montage, et la connexion conductrice de chaleur et d'électricité (7) est réalisée sous forme de pièce estampée, ladite pièce étant emmanchée sur la douille de montage (6) de l'enveloppe (1, 9) de l'appareil de commande, et la connexion conductrice de chaleur et d'électricité (7) présente deux lames (7a, 7b), dans lequel une première lame (7a) fait office de chemin thermique (TL) et une deuxième lame (7b) fait office de chemin électrique.

2. Dispositif selon la revendication 1, **caractérisé en ce que** l'unité à mesurer (10) peut être reliée à des conducteurs (5) du capteur de température (4) fixés sur la plaque de support (3) de l'appareil de commande en vue d'un transfert de température grâce à la connexion conductrice de chaleur et d'électricité (7, 7a), et une liaison électrique (7b) entre l'unité à mesurer (10), l'appareil de commande et un capot d'enveloppe (9) de l'appareil de commande peut être créée grâce à la connexion conductrice de chaleur et d'électricité (7, 7b).

3. Dispositif selon la revendication 1 ou 2, **caractérisé en ce que** la deuxième lame (7b) utilisée comme chemin électrique présente des dents de contact (7c) en vue d'une connexion électrique entre l'unité à mesurer (10) et le capot d'enveloppe (9) de l'appareil de commande.

4. Dispositif selon l'une quelconque des revendications 1 à 3, **caractérisé en ce que** la connexion conductrice de chaleur et d'électricité (7) est surmoulée avec une matière plastique jusque sur les dents de contact (7c).

5. Dispositif selon l'une quelconque des revendications 1 à 4, **caractérisé en ce qu'**une extrémité de la première lame (7b) utilisée comme chemin thermique et le conducteur (5), fixé sur la plaque de support (3), du capteur de température (4) sont surmoulés avec du silicone élastique liquide.

6. Dispositif selon l'une quelconque des revendications 1 à 5, **caractérisé en ce que** le surmoulage (8) est mis en oeuvre grâce à un procédé de moulage par injection en même temps qu'une étanchéification (2) de l'enveloppe (1, 9) et éventuellement à l'aide de calottes de serrage existantes.
